# EUROPÄISCHE PATENTSCHRIFT

(11) **EP 2 921 762 B1**
(45) Veröffentlichungstag und Bekanntmachung des Hinweises auf die Patenterteilung: **02.08.2017**
(21) Anmeldenummer: 14160244.1
(22) Anmeldetag: 17.03.2014
(51) Int. Cl.: F17C 13/04, F16K 1/12, F16K 1/18

(54) **Sperrventil**
Check valve
Vanne d'arrêt

(43) Veröffentlichungstag der Anmeldung: 23.09.2015
(73) Patentinhaber: MAGNA STEYR Engineering AG & Co KG, 8041 Graz (AT)
(72) Erfinder: Mayr, Franz, 8323 St.Marein bei Graz (AT)
(74) Vertreter: Zangger, Bernd

(56) Entgegenhaltungen:
- EP-B1- 0 837 280
- WO-A1-02/084154
- DE-A1- 3 102 743
- US-A- 3 727 633

## Beschreibung

### Gebiet der Erfindung

Die Erfindung betrifft ein Sperrventil zum Betanken eines Tanks mit einem gasförmigen Medium. Das Sperrventil umfasst, ein Ventilgehäuse, wobei im Ventilgehäuse ein Kolben in axialer Richtung verschiebbar angeordnet ist, wobei der Kolben eine axial durchgehende Bohrung aufweist, ein erstes Endstück des Ventilgehäuses, wobei das erste Endstück eine mit der axial durchgehende Bohrung des Kolbens strömungsverbundene Auslassöffnung aufweist, ein zweites Endstück des Ventilgehäuses, wobei das zweite Endstück) eine mit der axial durchgehende Bohrung des Kolbens strömungsverbundene Einlassöffnung aufweist, wobei eine erste Stirnseite des Kolbens und eine erste Stirnseite des zweiten Endstücks des Ventilgehäuses, bei Kontakt einen Dichtsitz bilden.

### Stand der Technik

Beim Betanken von Tanks mit gasförmigen Medien soll nach Erreichen eines bestimmten Befüllungsgrades die Betankung beendet werden.

Bei Betankungsanlagen die, beispielsweise mit einem Kraftfahrzeug, über Infrarotschnittstellen kommunizieren, besteht das Problem, dass bei Verschmutzung, Beschädigung oder nicht passendem Abstand der Infrarotschnittstellen eine Betankung nicht möglich ist.

Es wird daher eine Lösung gesucht, die einen Betankungsvorgang automatisch beendet, wenn der Tank befüllt ist. Eine Möglichkeit sind elektromagnetisch betätigte Ventile, die aufgrund von Signalen öffnen und schließen. Dabei besteht jedoch das Risiko, dass sich durch Funkenbildung das explosive gasförmige Medium entzünden kann. Es wird daher eine Lösung gesucht bei der ein Ventil verwendet wird, das rein mechanisch ausgebildet ist und den Betankungsvorgang, bei Erreichen des bestimmten Befüllungsgrades, beendet.

Mechanisch betätigte Ventile sind so ausgebildet, dass nach Erreichen eines definierten Drucks das Ventil selbständig schließt und so ein weiteres Betanken verhindert wird.

Aus der EP0837280B1 ist ein Ein-Richtungsventil bekannt, umfassend den Ventilkegel, die Ventilkegelführung, den Ventilsitz und die Feder, und ist dafür ausgelegt den Fluidstrom in Stromabwärtsrichtung von der Einlassöffnung zur Auslassöffnung zuzulassen und den Fluidstrom in Stromaufwärtsrichtung von der Auslassöffnung zur Einlassöffnung einzuschränken.

### Zusammenfassung der Erfindung

Es ist eine Aufgabe der Erfindung, ein Sperrventil zu verbessern, dass ein Betanken eines Tanks erlaubt, wobei das Sperrventil, rein mechanisch betätigt, nach Erreichen eines definierten Drucks eine weitere Zufuhr eines gasförmigen Mediums verhindert, unabhängig davon, ob auf der Zufuhrseite Druckerhöhungen, Druckabnahmen oder Druckschwankungen auftreten.

Eine weitere Aufgabe ist insbesondere das Schaffen eines verbesserten Strömungsverhalten des gasförmigen Mediums von der Einlassöffnung in Richtung zur Auslassöffnung des Sperrventils, um eine schnellere Betankung, sowie um einen optimalen Befüllungsgrad des Tanks zu erreichen.

Gelöst wird diese Aufgabe durch die Merkmale von Anspruch 1. Weiterbildungen der Erfindung sind Gegenstand der Unteransprüche.

Die Lösung der Aufgabe erfolgt durch ein Sperrventil zum Betanken eines Tanks mit einem gasförmigen Medium, umfassend, ein Ventilgehäuse, wobei im Ventilgehäuse ein Kolben in axialer Richtung verschiebbar angeordnet ist, wobei der Kolben eine axial durchgehende Bohrung aufweist, ein erstes Endstück des Ventilgehäuse, wobei das erste Endstück eine mit der axial durchgehende Bohrung des Kolbens strömungsverbundene Auslassöffnung aufweist, ein zweites Endstück des Ventilgehäuses, wobei das zweite Endstück eine mit der axial durchgehende Bohrung des Kolbens strömungsverbundene Einlassöffnung aufweist, wobei eine erste Stirnseite des Kolbens und eine erste Stirnseite des zweiten Endstücks des Ventilgehäuses, bei Kontakt einen Dichtsitz bilden, wobei dass eine Strömungsleiteinrichtung stromabwärts der Einlassöffnung des zweiten Endstücks ausgebildet ist, wobei die Strömungsleiteinrichtung zumindest eine mit der Einlassöffnung des zweiten Endstücks strömungsverbundene radial nach außen führende Bohrung des zweiten Endstücks und eine Kammer aufweist, wobei die Kammer zwischen dem Kolben und dem zweiten Endstück ausgebildet ist, wobei eine Strömungsleiteinrichtung stromabwärts der Einlassöffnung des zweiten Endstücks ausgebildet ist, wobei die Strömungsleiteinrichtung zumindest eine mit der Einlassöffnung des zweiten Endstücks strömungsverbundene radial nach außen führende Bohrung des zweiten Endstücks und eine Kammer aufweist, wobei die Kammer zwischen dem Kolben und dem zweiten Endstück ausgebildet ist, so dass das gasförmige Medium von der Einlassöffnung über die zumindest eine radial nach außen angeordnete Bohrung des zweiten Endstücks in die Kammer strömen kann und das gasförmige Medium in der Kammer von außen nach innen in Richtung der ersten Stirnseite des zweiten Endstücks gelenkt wird und eine Umlenkung des gasförmigen Mediums in Richtung der axial durchgehenden Bohrung des Kolbens bewirkt wird.

Das Ventilgehäuse kann in einer erfindungsgemäßen Ausführungsform im Wesentlichen ein hohler Zylinder, wobei an beiden Enden im Ventilgehäuse jeweils ein Innengewinde angebracht ist. Im Ventilgehäuse ist ein Kolben axial verschiebbar angeordnet. Der Kolben weist eine axial durchgehende Bohrung auf, die einerseits mit einer Einlassöffnung des zweiten Endstücks, andererseits mit der Auslassöffnung des ersten Endstücks strömungsverbunden ist. Eine erste Stirnseite des Kolbens bildet bei Kontakt mit einer ersten Stirnseite des zweiten Endstücks einen Dichtsitz, der entsprechend des eingestellten Sperrdruckes abdichtet und eine weitere Druckzunahme, Druckabnahme oder etwaige Druckschwankungen auf der Einlassseite des zweiten Endstückes, bspw. Druckschwankungen bedingt durch die Betankungsanlage ignoriert und geschlossen bleibt. Ohne Druckabnahme auf der Auslassseite des ersten Endstückes bzw. bei durch den gewöhnlichen Betrieb bedingter Entnahme von Medium aus dem Tank bzw. dem Tanksystem ist ein Öffnen des Sperrventils nicht möglich. Unter Stirnseite des Kolbens und Stirnseite des zweiten Endstücks wird hierbei auch jede stirnseitige konstruktive Ausformung verstanden, die zur Ausbildung des Dichtsitzes vorgesehen ist. Beispielsweise kann die erste Stirnseite des zweiten Endstücks, wie später noch ausführlicher beschrieben, eine Kontur aufweisen, insbesondere eine konkave Kontur. Der Kolben ist im drucklosen Zustand von der ersten Stirnseite des zweiten Endstücks beabstandet.

Erfindungsgemäß ist eine Strömungsleiteinrichtung stromabwärts der Einlassöffnung ausgebildet. Die Strömungsleiteinrichtung dient zur verbesserten Strömung des gasförmigen Mediums von der Einlassöffnung in Richtung der Auslassöffnung durch gezielte Umlenkung der Strömung des gasförmigen Mediums und umfasst im Wesentlichen mit der Einlassöffnung des zweiten Endstücks strömungsverbundene radial nach außen führende Bohrungen des zweiten Endstücks und eine Kammer, durch welche das gasförmige Medium von außen nach innen in Richtung der ersten Stirnseite des zweiten Endstücks gelenkt wird und eine Umlenkung des gasförmigen Mediums in Richtung der axial durchgehenden Bohrung des Kolbens bewirkt.. Die Kammer ist im Wesentlichen zwischen dem Kolben und dem zweiten Endstück ausgebildet und wird durch eine Innenwandung des Ventilgehäuses begrenzt.

Diese erfindungsgemäße Lösung ist vor allem deshalb vorteilhaft, da beim Betanken mit steigendem Druck im Tank der Spalt zwischen Kolben und dem zweiten Endstück immer kleiner wird, wodurch der Strömungskanal verengt wird. Durch die erfindungsgemäße Ausführung, wird ein besserer Befüllungsgrad erreicht, da der Strömungskanal bis zum Verschließen des Ventils eine optimale Durchströmung des gasförmigen Mediums ermöglicht.

Das Sperrventil ist insbesondere für Medien wie Wasserstoff, Methan, Erdgas oder einem Gemisch aus Wasserstoff und Erdgas geeignet. Durch Modifikation des Sperrventils ist auch eine Verwendung von flüssigen Medien wie beispielsweise Flüssig-Gas (LPG) geeignet.

Es resultiert ein rein mechanisches Sperrventil, das aufgrund einer eingestellten Federkraft ab einem bestimmten Druck die Durchlassöffnung dicht verschließt und weder bei weiterer Druckzunahme oder Druckabnahme bis Unterdruck in der Zulauföffnung öffnet und somit immer verschlossen bleibt. Die Entnahme von Medium erfolgt an einer oder mehreren anderen Stellen im Druckspeichersystem.

Weiterbildungen der Erfindung sind in den abhängigen Ansprüchen, der Beschreibung sowie den beigefügten Zeichnungen angegeben.

Gemäß einer bevorzugten Ausführungsform ist eine Ausbuchtung an der ersten Stirnseite des zweiten Endstücks ausgebildet. Die Ausbuchtung bewirkt, dass das gasförmige Medium besonders rasch in Richtung der axial durchgehenden Bohrung des Kolbens umgelenkt wird.

In einer bevorzugten Ausführungsform sind das erste Endstück und/oder das zweite Endstück separate Bauteile. Das erste Endstück und/oder das zweite Endstück sind am Ventilgehäuse befestigt. Die Befestigung am Ventilgehäuse kann durch ein geeignetes im Stand der Technik bekanntes Verfahren, beispielsweise Kleben, Löten, Schweißen, Pressen oder Verschrauben erfolgen.

Gemäß einer Ausführungsform der Erfindung ist das erste Endstück dem zweiten Endstück gegenüberliegend angeordnet. Durch diese Anordnung kann das Ventilgehäuse besonders kompakt und einfach ausgebildet werden.

In einer weiteren Ausführungsform ist die Ausbuchtung des zweiten Endstücks im Wesentlichen koaxial mit der Mittelachse der axial durchgehenden Bohrung des Kolbens ausgebildet. Dadurch wird gewährleistet, dass, insbesondere bei Ausbildung der einzelnen Bauteile des Sperrventils als Rotationsteile, die Strömung des gasförmigen Mediums optimal erfolgt. Es wird damit auch verhindert, dass die Ausbuchtung des zweiten Endstücks, im geschlossenen Zustand des Sperrventils, Kontakt mit dem Kolben haben kann, da die Ausbuchtung in die axial durchgehende Bohrung des Kolbens ragt.

Vorzugsweise ist die Ausbuchtung des zweiten Endstücks als Spitz ausgebildet. Der Spitz weist dabei bevorzugt im Wesentlichen die Form eines zylindrischen Kegels oder Kegelstumpfs auf, wobei der maximale oder zumindest der durchschnittliche Durchmesser der Ausbuchtung des zweiten Endstücks kleiner ausgebildet ist als der Durchmesser der axial durchgehenden Bohrung des Kolbens. Dadurch ist gewährleistet, dass das gasförmige Medium mit geringem Strömungswiderstand in die axial durchgehende Bohrung des Kolbens strömen kann.

Gemäß einer Ausführungsform der Erfindung weist die erste Stirnseite des zweiten Endstücks eine radial umlaufende, annähernd konkave Ausbildung auf.

In einer weiteren besonderen Ausführungsform bildet die radial umlaufende, annähernd konkave Ausbildung einen verlaufenden Übergang mit dem Spitz aus.

Durch diese geometrische Ausgestaltung wird das gasförmige Medium besonders schnell und effizient in die axial durchgehende Bohrung des Kolbens gelenkt.

Gemäß einer weiteren Ausgestaltung der Erfindung weisen die radial nach außen führenden Bohrungen des zweiten Endstücks gemeinsam einen Querschnitt auf, der zumindest dem Querschnitt der Einlassöffnung des zweiten Endstücks entspricht. Dadurch wird sichergestellt, dass keine Drosselung oder Rückstau der Strömung des gasförmigen Mediums aufgrund eines zu kleinen Querschnitts auftreten kann.

In einer weiteren erfinderischen Ausführungsform weist das Ventilgehäuse im Hohlraum eine erste Stirnseite auf, die eine radial umlaufende, annähernd konkave Ausbildung aufweist, wobei sich die radial umlaufende, konkave Ausbildung zwischen der Innenwandung des Ventilgehäuses und dem Hohlraum erstreckt. Dadurch wird das gasförmige Medium schneller in Richtung der Ausbuchtung des zweiten Endstücks umgelenkt.

In einer besonderen Ausführungsform sind die radial nach außen führenden Bohrungen des zweiten Endstücks tangential versetzt zur Mittelachse der Einlassöffnung des zweiten Endstücks angeordnet. Durch die tangentiale Versetzung soll das ausströmende gasförmige Medium einen Drall erhalten, wodurch der Strömungsfluss weiter begünstigt werden kann. Dies ist vor allem deshalb vorteilhaft, da mit steigendem Druck der Spalt zwischen Kolben und dem zweiten Endstück immer kleiner und somit der Strömungskanal verengt wird.

Ein elastisches Element ist erfindungsgemäß zwischen einer zweiten Stirnseite des Kolbens und einer zweiten Stirnseite des Gehäuseventils angeordnet. Die zweite Stirnseite des Kolbens ist bevorzugt als Stirnseite eines Bunds des Kolbens ausgebildet. Der Bund ist zwischen der ersten Gleitfläche des Kolbens und der zweiten Gleitfläche des Kolbens angeordnet. Die zweite Stirnfläche des Kolbens, bzw. des Bunds des Kolbens ist der zweiten Gleitfläche des Kolbens zugewandt. Die zweite Stirnseite des Ventilgehäuses ist von der ersten Stirnseite des Ventilgehäuses abgewandt und der zweiten Stirnseite des Kolbens zugewandt.

Bevorzugt wird hierbei als elastisches Element zumindest eine Tellerfeder verwendet. Tellerfedern bieten den Vorteil, dass bei kleinerem Bauraum höhere Kräfte übertragen werden können.

Das elastische Element ist in einer erfinderischen Ausgestaltung so ausgebildet, dass es im drucklosen Zustand den Kolben gegen eine Stirnseite des ersten Endstücks vorspannt. Bevorzugt ist das elastische Element ein Tellerfederpaket, welches eine Federkraft aufbringt, um den Kolben gegen die erste Stirnwand des ersten Endstücks zu drücken. Dadurch ist gewährleistet, dass der Spalt bzw. die Kammer zwischen der ersten Stirnseite des Kolbens und der ersten Stirnseite des zweiten Endstücks und somit der Strömungskanal maximal groß ist und das gasförmige Medium bis zum Schluss der Betankung ungehindert in den Tank strömen kann. Dadurch werden auch Vibrationen im Ventilgehäuse vermieden.
In einer weiteren erfinderischen Ausbildung ist zwischen einer ersten Gleitfläche des Kolbens und dem Ventilgehäuse zumindest ein erstes Dichtungselement angeordnet. Das zumindest eine erste Dichtungselement ist dabei bevorzugt im Bereich zwischen der ersten Stirnseite und der zweiten Stirnseite des Ventilgehäuses angeordnet. Das zumindest eine erste Dichtungselement ist dabei so ausgelegt, dass es dem hohen Druck, der an der Einlassöffnung des zweiten Endstücks bei Betankung auftritt, standhält. Das zumindest eine erste Dichtungselement ist weiter so ausgebildet, dass der Kolben auf dem zumindest einen Dichtungselement axial gleiten kann. Gleichzeitig dient das zumindest eine erste Dichtungselement als Lagerung des Kolbens. Das zumindest eine erste Dichtungselement ist dabei in einer Nut im Ventilgehäuse angeordnet. Die Nut ist dabei in einem Bereich zwischen der ersten Stirnseite und der zweiten Stirnseite des Ventilgehäuses angeordnet.

Gemäß einer weiteren erfinderischen Ausführungsform ist zwischen einer zweiten Gleitfläche des Kolbens und dem ersten Endstück zumindest ein zweites Dichtungselement angeordnet. Das zumindest eine zweite Dichtungselement ist dabei im Bereich zwischen der Stirnseite des ersten Endstücks und dem Bund des Kolbens angeordnet. Das zumindest eine zweite Dichtungselement ist ebenfalls so ausgebildet, dass der Kolben einerseits axial gleiten kann, andererseits von dem zumindest einen Dichtungselement gelagert wird. Da an der Auslassöffnung des ersten Endstücks bei vollgetanktem Tank ein ähnlich hoher Druck auftritt wie an der Einlassöffnung des zweiten Endstücks während dem Betanken, muss das zumindest eine zweite Dichtungselement ebenfalls so ausgebildet sein, dass es dem hohen Druck standhalten kann. Das zumindest eine zweite Dichtungselement ist dabei in einer Nut im ersten Endstück angeordnet.

In einer weiteren erfinderischen Ausführungsform ist zwischen dem zweiten Endstück und dem Ventilgehäuse zumindest ein drittes Dichtungselement angeordnet. Das zumindest eine dritte Dichtungselement dichtet dabei radial an einer dritten Stirnseite im Bereich des Innengewindes des Ventilgehäuses gegen eine zweite Stirnseite des zweiten Endstücks ab. In der zweiten Stirnseite des zweiten Endstücks ist dabei eine radial umlaufende Nut ausgebildet in der das zumindest eine dritte Dichtungselement angeordnet ist.

In einer weiteren erfinderischen Ausführung sind das erste Endstück und das zweite Endstück durch Verschrauben am Ventilgehäuse befestigt. Bevorzugt sind dabei das erste Endstück und das zweite Endstück an den Enden des Ventilgehäuses jeweils mit den dafür vorgesehenen Innengewinden verschraubt. Das Verschrauben bietet den Vorteil, dass das Sperrventil lösbar verbunden ist. Beispielsweise können deshalb die im Sperrventil angeordneten Komponenten wie Federn, Dichtungselemente und Kolben ausgetauscht werden. Es ist zudem auf einfache Weise möglich, die Vorspannkraft des Federelements, auf eine gewünschte Kraft, die ein Abheben des Kolben von der Stirnseite des ersten Endstücks erst bei Erreichen eines bestimmten Drucks in der Auslassöffnung während der Betankung zulassen soll, durch die Einschraubtiefe des ersten Endstücks in das Ventilgehäuse voreinzustellen. Dadurch kann der mit dem Sperrventil verbundene Tank nur bis zu einem durch die vorher eingestellte Federkraft definierten Druck befüllt und das Sperrventil auch ohne elektrische Mittel, beispielsweise Aktuatoren, immer sicher geschlossen gehalten werden.

Damit das gasförmige Medium schnellstmöglich in den Tank geleitet werden kann ist in einer weiteren erfinderischen Ausführungsform die Mittelachse der Auslassöffnung des ersten Endstücks mit der Mittelachse der axial durchgehenden Bohrung des Kolbens koaxial ausgebildet.

Gemäß einer weiteren erfinderischen Ausführungsform weist die axial durchgehende Bohrung des Kolbens einen kleineren Durchmesser als die Auslassöffnung des ersten Endstücks auf.

In einer weiteren erfinderischen Ausführungsform wird eine Ringfläche, an einer dritten Stirnseite des Kolbens gebildet, wobei die dritte Stirnseite des Kolbens der ersten Stirnseite des ersten Endstücks zugewandt ist. Die Ringfläche wird dabei durch den Durchmesser der axial durchgehenden Bohrung des Kolbens und den Durchmesser der Auslassöffnung des ersten Endstücks definiert und ist in Abhängigkeit der Federkraft des elastischen Elements so gestaltet, dass bei Erreichen eines Drucks an der Auslassöffnung des ersten Endstücks von 90 bis 95% des Sperrdrucks des Tanks sich der Kolben von der Stirnseite des ersten Endstücks abhebt, wodurch die ganze Fläche der dritten Stirnseite des Kolbens wirksam wird, und der Kolben schnell axial in Richtung der ersten Stirnseite des zweiten Endstücks verschoben wird.
Der Sperrdruck wird durch den maximal zulässigen Betriebsdruck bzw. des Tanks definiert. Der Sperrdruck ist erforderlich um eine Beschädigung des Tanks bzw. des Tanksystems zu verhindern.

Durch den Flächenunterschied der ersten Stirnseite des Kolbens zur dritten Stirnseite des Kolbens, wobei die Fläche der dritten Stirnseite des Kolbens größer als die Fläche der ersten Stirnfläche des Kolbens ist, wird sichergestellt, dass das Sperrventil auch dann geschlossen bleibt, wenn an der Einlassöffnung der Druck über den Sperrdruck steigt. Das Sperrventilbleibt auch dann geschlossen, wenn der Druck an der Einlassöffnung unter den Sperrdruck sinkt, da die Schließkraft im Wesentlichen nur durch den Druck im Tank auf die dritte Stirnfläche des Kolbens, abzüglich der Tellerfederpaketkraft, bestimmt wird.

Erfindungsgemäß weist der Kolben eine erste Stirnseite auf, wobei die Stirnseite bevorzugt eine Dichtkante ausbildet. Die Dichtkante ist dabei eine zumindest in der Nähe des Außendurchmessers der ersten Stirnseite des Kolbens. Besonders vorteilhaft ist es, wenn die Dichtkante ganz am äußeren Radius der ersten Stirnseite des Kolbens liegt, da diesfalls im geschlossenen Zustand des Sperrventils keine ventileingangsdruckbedingten zusätzlichen Kräfte auf den Kolben wirken können. Dadurch wird gewährleistet, dass das gasförmige Medium, aufgrund des durch die Ausbildung der Strömungsleiteinrichtung erhaltenen Dralls, auch bei sehr kleinem Spalt zwischen der Dichtkante des Kolbens und der Stirnseite des zweiten Endstücks noch eine ausreichende Strömung erreicht. Die Dichtkante kann in einer Ausführungsform aus einem vom Kolben verschiedenen Material hergestellt sein.

### Kurzbeschreibung der Zeichnungen

Die Erfindung wird im Folgenden beispielhaft unter Bezugnahme auf die Zeichnungen beschrieben.
- Fig. 1: ist eine Schnittansicht eines erfindungsgemäßen Sperrventils.
- Fig. 2: ist ein Detail einer Schnittansicht, welche radial nach außen angeordnete Bohrungen darstellt.
- Fig. 3: ist ein Detail einer Schnittansicht, welche die erfindungsgemäßen radial nach außen angeordneten Bohrungen darstellt.

### Detaillierte Beschreibung der Erfindung

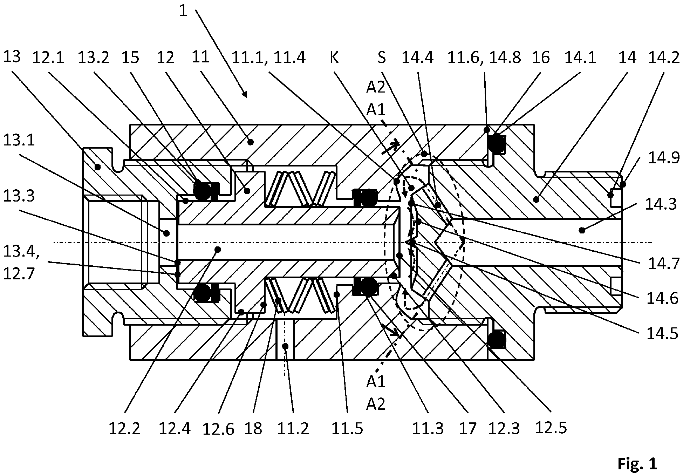

In Fig. 1 ist eine Schnittansicht durch ein erfindungsgemäßes Sperrventil 1 dargestellt. Das Sperrventil 1 umfasst im Wesentlichen ein Ventilgehäuse 11, einen axial verschiebbaren Kolben 12, ein erstes Endstück 13 und ein zweites Endstück 14. Das erste Endstück 13 und das zweite Endstück 14 sind in das Ventilgehäuse 11 eingeschraubt. Das erste Endstück 13 weist dabei ein Außengewinde auf, das mit dem Innengewinde des Ventilgehäuses 11 verschraubbar ist. Das erste Endstück 13 weist weiter ein Innengewinde auf, mit welchen dieses mit einem Tank (nicht dargestellt) verbindbar ist. Das Innengewinde ist mit der Auslassöffnung 13.1 des ersten Endstücks 13 strömungsverbunden. Das erste Endstück weist weiter eine Nut 13.2 auf, in der das zumindest eine erste Dichtungselement 15 angeordnet ist. Der Kolben 12 ist im Ventilgehäuse 11 angeordnet und wird von zumindest einem ersten Dichtungselement 15 auf einer ersten Gleitfläche 12.1, die gleichzeitig als Dichtfläche ausgebildet ist, gelagert. Das zweite Endstück 14 weist ebenfalls ein Außengewinde auf, mit welchem es mit dem Ventilgehäuse 11 verschraubbar ist. Ein Außengewinde ist zur Verbindung mit der Betankungsanlage bzw. mit entsprechenden Rohrleitungen (nicht dargestellt) vorgesehen. Zumindest ein zweites Dichtungselement 16 ist in einer zweiten Stirnseite 14.8 des zweiten Endstücks 14 in einer radial umlaufenden Nut 14.1 angeordnet. Eine zweite radial umlaufende Nut 14.2, die ebenfalls, an einer dritten Stirnseite 14.9 des zweiten Endstücks 14, ausgebildet ist, dient zur Aufnahme eines weiteren Dichtungselements (nicht dargestellt). Das zweite Endstück 14 weist eine Einlassöffnung 14.3 auf durch welche beim Betanken ein gasförmiges Medium von der Tankanlage in Richtung des Tanks strömen kann. Das einströmende Gas tritt dabei durch eine Strömungsleiteinrichtung S umfassend radial nach außen angeordnete Bohrungen 14.4 in eine Kammer K. Die radial nach außen angeordnete Bohrungen 14.4 des zweiten Endstücks 14, die Kammer K, eine Ausbuchtung 14.5 an der ersten Stirnseite 14.7 des zweiten Endstücks 14 angeordnet, wobei die Ausbuchtung 14.5 des zweiten Endstücks 14 bevorzugt die Form eines Spitzes aufweist. Die Strömungsleiteinrichtung S umfasst weiter eine erste Stirnseite 11.4 im Ventilgehäuse 11 auf, wobei die erste Stirnseite 11.4 im Ventilgehäuse 11 eine radial umlaufende, konkave Ausbildung 11.1 aufweist, die sich von der Innenwandung des Ventilgehäuses 11 in Richtung Hohlraum des Ventilgehäuses 11 erstreckt, sowie eine an der ersten Stirnseite 14.7 des zweiten Endstücks 14 eine radial umlaufende, konkave Ausbildung 14.6, wobei die radial umlaufende, konkave Ausbildung 14.6 einen verlaufenden Übergang mit der Ausbuchtung 14.5 des zweiten Endstücks 14 ausbildet. Durch die beschriebene Strömungsleiteinrichtung S strömt das gasförmige Medium besonders vorteilhaft in Richtung der axial durchgehenden Bohrung 12.2 des Kolbens 12. Dies ist vor allem dann vorteilhaft wenn sich der Spalt, und somit die Kammer K, verkleinert, wenn der Kolben 12 in Richtung der ersten Stirnseite 14.7 des zweiten Endstücks 14 verschoben wird, da durch die Umlenkungen der radial umlaufenden, konkaven Ausbildungen 11.1 und 14.6 das gasförmige Medium fast ohne Strömungsverluste in die axial durchgehende Bohrung 12.2 des Kolbens 12 strömen kann. Ein zumindest drittes Dichtungselement 17 dient zum Abdichten zwischen dem Ventilgehäuse 11 und einer zweiten Gleitfläche 12.3 des Kolbens 12. Das zumindest dritte Dichtungselement 17 ist in einer Nut 11.3 angeordnet, wobei die Nut 11.3 im Bereich zwischen den im Hohlraum ausgebildeten erster und zweiter Stirnseite 11.4 und 11.5 des Ventilgehäuses 11 angeordnet ist. Das zweite zumindest eine Dichtungselement 17 dient weiter zur Lagerung des Kolbens 12 im Ventilgehäuse 11. Der Kolben 12 weist einen Bund 12.4 auf, wobei der Bund zwischen der ersten Gleitfläche 12.1 und der zweiten Gleitfläche 12.3 des Kolbens angeordnet ist. Der Bund 12.4 weist eine zweite Stirnseite 12.6 des Kolbens auf, welche der zweiten Stirnseite 11.5 des Ventilgehäuses 11 zugewandt ist. Im Hohlraum des Ventilgehäuses 11 ist ein elastisches Element 18 angeordnet, wobei das elastische Element 18 bevorzugt ein Tellerfederpaket ist. Idealerweise ist die Überdeckung von den Flächen der ersten Stirnseite 13.4 des ersten Endstücks 13 und der dritten Stirnfläche des Kolbens 12.7 entsprechend der Durchmesser der axial durchgehenden Bohrung 12.2 und dem Durchmesser der Auslassöffnung 13.1 sowie die eingestellte Federkraft derart, dass der Kolben abhebt wenn der Druck an der Auslassöffnung 13.1 des ersten Endstücks 13, 90 - 95% des Drucks an der Einlassöffnung 14.3 des zweiten Endstücks 14 erreicht hat. Da sich nach dem Abheben des Kolbens 12 von der ersten Stirnseite 13.4 des ersten Endstücks 13 die Ringfläche 13.3 auf den Durchmesser der ersten Gleitfläche 12.1 des Kolbens 12 vergrößert, wird der Kolben 12 relativ schnell in Richtung der ersten Stirnseite 14.7 des zweiten Endstücks 14 verschoben, bis der Kolben 12 gegen die erste Stirnseite 14.7 des zweiten Endstücks 14 abdichtet und die Strömung des gasförmigen Mediums unterbricht. Die Abdichtung erfolgt hierbei über die erste Stirnseite 12.5 des Kolbens 12, welche eine Dichtkante ausbildet. Die Dichkante ist dabei eine im Wesentlichen außen radial umlaufende Kante der ersten Stirnseite 12.5 des Kolbens 12. Die radial umlaufende Kante des Kolbens 12 kann beispielsweise im Bereich der ersten Stirnseite 12.5 des Kolbens 12 eine Fase oder Abrundung aufweisen. Im Bereich des elastischen Elements 18 ist im Ventilgehäuse 11 eine Entlüftungsbohrung 11.2 vorgesehen welche einen Druckausgleich der Luft im Ventilgehäuse 11 zwischen den beiden zumindest einen ersten und dritten Dichtungselementen 15 und 17 zulässt wenn der Kolben 12 axial verschoben wird.

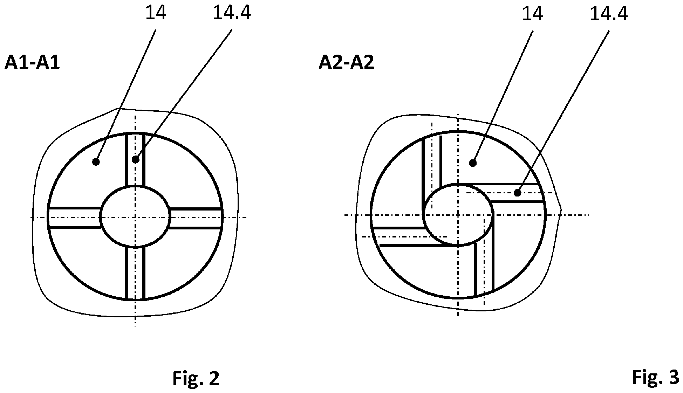

In den Fig. 2 und 3 ist ein Schnitt A1-A1 bzw. A2-A2 durch die radial nach außen angeordneten Bohrungen 14.4 des zweiten Endstücks. In Fig. 2 sind die radial nach außen angeordneten Bohrungen 14.4 zentrisch zur Mittelachse der Einlassöffnung 14.3 des zweiten Endstücks 14 angeordnet. In Fig. 3 sind die radial nach außen angeordneten Bohrungen 14.4 des zweiten Endstücks 14 tangential zur Mittelachse der Einlassöffnung 14.3 des zweiten Endstücks 14 angeordnet. Dadurch erhält das gasförmige Medium einen Drall, wodurch das gasförmige Medium schneller in Richtung der axial durchgehenden Bohrung 12.2 des Kolbens 12 gelenkt werden, womit ein verbessertes Strömungsverhalten erreicht wird.

### Bezugszeichenliste

- 1: Sperrventil
- 11: Ventilgehäuse
- 11.1: radial umlaufende, konkave Ausbildung
- 11.2: Entlüftungsbohrung
- 11.3: Nut
- 11.4: erste Stirnseite
- 11.5: zweite Stirnseite
- 11.6: dritte Stirnseite
- 12: Kolben
- 12.1: erste Gleitfläche
- 12.2: axial durchgehende Bohrung
- 12.3: zweite Gleitfläche
- 12.4: Bund
- 12.5: erste Stirnseite
- 12.6: zweite Stirnseite
- 12.7: dritte Stirnseite
- 13: erstes Endstück
- 13.1: Auslassöffnung
- 13.2: Nut
- 13.3: Ringfläche
- 13.4: erste Stirnseite
- 14: zweites Endstück
- 14.1: Nut
- 14.2: Nut
- 14.3: Einlassöffnung
- 14.4: radial angeordnete Bohrungen
- 14.5: Ausbuchtung
- 14.6: radial umlaufende, konkave Ausbildung
- 14.7: erste Stirnseite
- 14.8: zweite Stirnseite
- 14.9: dritte Stirnseite
- 15: erstes Dichtungselement
- 16: zweites Dichtungselement
- 17: drittes Dichtungselement
- 18: elastisches Element

- K: Kammer
- S: Strömungsleiteinrichtung

## Patentansprüche

1. Sperrventil (1) zum Betanken eines Tanks mit einem gasförmigen Medium, umfassend, ein Ventilgehäuse (11), wobei im Ventilgehäuse (11) ein Kolben (12) in axialer Richtung verschiebbar angeordnet ist, wobei der Kolben (12) eine axial durchgehende Bohrung (12.2) aufweist, ein erstes Endstück (13) des Ventilgehäuses (11), wobei das erste Endstück (13) eine mit der axial durchgehende Bohrung (12.2) des Kolbens (12) strömungsverbundene Auslassöffnung (13.1) aufweist, ein zweites Endstück (14) des Ventilgehäuses (11), wobei das zweite Endstück (14) eine mit der axial durchgehende Bohrung (12.2) des Kolbens (12) strömungsverbundene Einlassöffnung (14.3) aufweist, wobei eine erste Stirnseite (12.5) des Kolbens (12) und eine erste Stirnseite (14.7) des zweiten Endstücks (14) des Ventilgehäuses (11), bei Kontakt einen Dichtsitz bilden,
**dadurch gekennzeichnet, dass** eine Strömungsleiteinrichtung (S) stromabwärts der Einlassöffnung (14.3) des zweiten Endstücks (14) ausgebildet ist, wobei die Strömungsleiteinrichtung (S) zumindest eine mit der Einlassöffnung (14.3) des zweiten Endstücks (14) strömungsverbundene radial nach außen führende Bohrung (14.4) des zweiten Endstücks (14) und eine Kammer (K) aufweist, wobei die Kammer (K) zwischen dem Kolben (12) und dem zweiten Endstück (14) ausgebildet ist, so dass das gasförmige Medium von der Einlassöffnung (14.3) über die zumindest eine radial nach außen angeordnete Bohrung (14.4) des zweiten Endstücks (14) in die Kammer strömen kann und das gasförmige Medium in der Kammer (K) von außen nach innen in Richtung der ersten Stirnseite (14.7) des zweiten Endstücks (14) gelenkt wird und eine Umlenkung des gasförmigen Mediums in Richtung der axial durchgehenden Bohrung des Kolbens (12) bewirkt wird.

2. Sperrventil (1) nach Anspruch 1,
**dadurch gekennzeichnet, dass** eine Ausbuchtung (14.5) an der ersten Stirnseite (14.7) des zweiten Endstücks (14) ausgebildet ist.

3. Sperrventil (1) nach Anspruch 1 oder 2,
**dadurch gekennzeichnet, dass** das erste Endstück (13) und/oder das zweite Endstück (14) separate Bauteile sind, wobei das erste Endstück (13) und/oder das zweite Endstück (14) am Ventilgehäuse (11), befestigt ist.

4. Sperrventil (1) nach zumindest einem der vorhergehenden Ansprüche,
**dadurch gekennzeichnet, dass** das erste Endstück (13) dem zweiten Endstück (14) gegenüberliegend angeordnet ist.

5. Sperrventil (1) nach zumindest einem der vorhergehenden Ansprüche,
**dadurch gekennzeichnet, dass** die Ausbuchtung (14.5) im Wesentlichen koaxial mit der Mittelachse der axial durchgehenden Bohrung (12.2) des Kolbens (12) ausgebildet ist.

6. Sperrventil (1) nach zumindest einem der vorhergehenden Ansprüche,
**dadurch gekennzeichnet, dass** die Ausbuchtung (14.5) des zweiten Endstücks (14) einen Spitz ausbildet, wobei der Spitz einen kleineren Durchmesser als die axial durchgehende Bohrung (12.2) des Kolbens (12) aufweist.

7. Sperrventil (1) nach zumindest einem der vorhergehenden Ansprüche,
**dadurch gekennzeichnet, dass** die erste Stirnseite (14.7) des zweiten Endstücks (14) eine radial umlaufende, konkave Ausbildung (14.6) aufweist.

8. Sperrventil (1) nach Anspruch 7
**dadurch gekennzeichnet, dass** die radial umlaufende, konkave Ausbildung (14.6) einen verlaufenden Übergang mit dem Spitz ausbildet.

9. Sperrventil (1) nach zumindest einem der vorhergehenden Ansprüche,
**dadurch gekennzeichnet, dass** die radial nach außen führenden Bohrungen (14.4) des zweiten Endstücks (14) gemeinsam einen Querschnitt aufweisen der zumindest dem der Einlassöffnung (14.3) des zweiten Endstücks (14) entspricht.

10. Sperrventil (1) nach zumindest einem der vorhergehenden Ansprüche,
**dadurch gekennzeichnet, dass** das Ventilgehäuse (11) eine erste Stirnseite (11.4) aufweist, die eine radial umlaufende, konkave Ausbildung (11.1) aufweist, so dass das gasförmige Medium von außen nach innen in Richtung zur Ausbuchtung (14.5) des zweiten Endstücks (14) umgelenkt wird.

11. Sperrventil (1) nach zumindest einem der vorhergehenden Ansprüche,
**dadurch gekennzeichnet, dass** die zumindest eine radial nach außen führende Bohrung (14.4) des zweiten Endstücks (14) tangential versetzt zur Mittelachse der Einlassöffnung (14.3) des zweiten Endstücks (14) angeordnet ist, so dass die zumindest eine radial nach außen führende Bohrung (14.4), bei einer Betankung, einen Drall des gasförmigen Mediums bewirkt.

12. Sperrventil (1) nach zumindest einem der vorhergehenden Ansprüche,
**dadurch gekennzeichnet, dass** zwischen einer zweiten Stirnseite (12.6) des Kolbens (12) und einer zweiten Stirnseite (11.5) des Gehäuseventils (11) ein elastisches Element (18) angeordnet ist.

13. Sperrventil (1) nach Anspruch 12,
**dadurch gekennzeichnet, dass** das elastische Element (18) zumindest eine Tellerfeder ist.

14. Sperrventil nach Anspruch 12 und 13,
**dadurch gekennzeichnet, dass** das elastische Element (18) den Kolben (12) axial gegen das erste Endstück (13) vorspannt.

15. Sperrventil (1) nach zumindest einem der vorhergehenden Ansprüche,
**dadurch gekennzeichnet, dass** zwischen einer zweiten Gleitfläche (12.3) des Kolbens (12) und dem Ventilgehäuse (11) zumindest ein drittes Dichtungselement (17) angeordnet ist.

16. Sperrventil (1) nach zumindest einem der vorhergehenden Ansprüche,
**dadurch gekennzeichnet, dass** zwischen einer ersten Gleitfläche (12.1) des Kolbens (12) und dem ersten Endstück (13) zumindest ein erstes Dichtungselement (15) angeordnet ist.

17. Sperrventil (1) nach zumindest einem der vorhergehenden Ansprüche,
**dadurch gekennzeichnet, dass** zwischen dem zweiten Endstück (14) und dem Ventilgehäuse (11) zumindest ein zweites Dichtungselement (16) angeordnet ist.

18. Sperrventil (1) nach zumindest einem der vorhergehenden Ansprüche,
**dadurch gekennzeichnet, dass** die Mittelachse der Auslassöffnung (13.1) des ersten Endstücks (13) mit der Mittelachse der axial durchgehenden Bohrung (12.2) des Kolbens (12) koaxial ist.

19. Sperrventil (1) nach zumindest einem der vorhergehenden Ansprüche,
**dadurch gekennzeichnet, dass** das erste Endstück (13) und/oder das zweite Endstück (14) durch Verschrauben am Ventilgehäuse (11) verbunden sind.

20. Sperrventil (1) nach zumindest einem der vorhergehenden Ansprüche,
**dadurch gekennzeichnet, dass** die axial durchgehende Bohrung (12.2) des Kolbens (12) einen kleineren Durchmesser als die Auslassöffnung (13.1) des ersten Endstücks (13) aufweist.

21. Sperrventil (1) nach Anspruch 12
**dadurch gekennzeichnet, dass** eine Ringfläche (13.3), gebildet an der ersten Stirnseite (12.5) des Kolbens (12) durch den Durchmesser der axial durchgehenden Bohrung (12.2) des Kolbens (12) und den Durchmesser der Auslassöffnung (13.1) des ersten Endstücks (13), in Abhängigkeit der Federkraft des elastischen Elements (18) so gestaltet ist, dass bei Erreichen eines Drucks an der Auslassöffnung (13.1) des ersten Endstücks (13) von 90 bis 95% des Sperrdrucks des Tanks sich der Kolben (12) von der ersten Stirnseite (13.4) des ersten Endstücks (13) abhebt und axial in Richtung der ersten Stirnseite (14.7) des zweiten Endstücks (14) verschoben wird.

22. Sperrventil (1) nach zumindest einem der vorhergehenden Ansprüche,
**dadurch gekennzeichnet, dass** die erste Stirnseite (12.5) des Kolbens (12) eine Dichtkante ausbildet.

## Claims

1. Shut-off valve (1) for filling a tank with a gaseous medium, comprising: a valve housing (11), a piston (12) being arranged in the valve housing (11) such that it can be displaced in the axial direction, the piston (12) having an axially continuous bore (12.2); a first end piece (13) of the valve housing (11), the first end piece (13) having an outlet opening (13.1) which is flow-connected to the axially continuous bore (12.2) of the piston (12); a second end piece (14) of the valve housing (11), the second end piece (14) having an inlet opening (14.3) which is flow-connected to the axially continuous bore (12.2) of the piston (12); a first end side (12.5) of the piston (12) and a first end side (14.7) of the second end piece (14) of the valve housing (11) forming a sealing seat upon contact, **characterized in that** a flow guiding device (S) is configured downstream of the inlet opening (14.3) of the second end piece (14), the flow guiding device (S) having at least one bore (14.4) of the second end piece (14) and a chamber (K), which bore (14.4) leads radially to the outside and is flow-connected to the inlet opening (14.3) of the second end piece (14), the chamber (K) being configured between the piston (12) and the second end piece (14), with the result that the gaseous medium can flow from the inlet opening (14.3) via the at least one radially outwardly arranged bore (14.4) of the second end piece (14) into the chamber and the gaseous medium in the chamber (K) is directed from the outside to the inside in the direction of the first end side (14.7) of the second end piece (14) and a deflection of the gaseous medium is brought about in the direction of the axially continuous bore of the piston (12).

2. Shut-off valve (1) according to Claim 1, **characterized in that** a bulge (14.5) is configured on the first end side (14.7) of the second end piece (14).

3. Shut-off valve (1) according to Claim 1 or 2, **characterized in that** the first end piece (13) and/or the second end piece (14) are/is separate components, the first end piece (13) and/or the second end piece (14) being fastened to the valve housing (11).

4. Shut-off valve (1) according to at least one of the preceding claims, **characterized in that** the first end piece (13) is arranged so as to lie opposite the second end piece (14).

5. Shut-off valve (1) according to at least one of the preceding claims, **characterized in that** the bulge (14.5) is configured so as to be substantially coaxial with the centre axis of the axially continuous bore (12.2) of the piston (12).

6. Shut-off valve (1) according to at least one of the preceding claims, **characterized in that** the bulge (14.5) of the second end piece (14) forms a point, the point having a smaller diameter than the axially continuous bore (12.2) of the piston (12).

7. Shut-off valve (1) according to at least one of the preceding claims, **characterized in that** the first end side (14.7) of the second end piece (14) has a radially circumferential, concave formation (14.6).

8. Shut-off valve (1) according to Claim 7, **characterized in that** the radially circumferential, concave formation (14.6) forms a running transition with the point.

9. Shut-off valve (1) according to at least one of the preceding claims, **characterized in that** the radially outwardly leading bores (14.4) of the second end piece (14) together have a cross section which corresponds at least to that of the inlet opening (14.3) of the second end piece (14).

10. Shut-off valve (1) according to at least one of the preceding claims, **characterized in that** the valve housing (11) has a first end side (11.4) which has a radially circumferential, concave formation (11.1), with the result that the gaseous medium is deflected from the outside towards the inside in the direction of the bulge (14.5) of the second end piece (14).

11. Shut-off valve (1) according to at least one of the preceding claims, **characterized in that** the at least one radially outwardly leading bore (14.4) of the second end piece (14) is arranged offset tangentially with respect to the centre axis of the inlet opening (14.3) of the second end piece (14), with the result that the at least one radially outwardly leading bore (14.4) brings about swirling of the gaseous medium during filling.

12. Shut-off valve (1) according to at least one of the preceding claims, **characterized in that** an elastic element (18) is arranged between a second end side (12.6) of the piston (12) and a second end side (11.5) of the housing valve (11).

13. Shut-off valve (1) according to Claim 12, **characterized in that** the elastic element (18) is at least one disc spring.

14. Shut-off valve according to Claims 12 and 13, **characterized in that** the elastic element (18) prestresses the piston (12) axially against the first end piece (13).

15. Shut-off valve (1) according to at least one of the preceding claims, **characterized in that** at least one third seal element (17) is arranged between a second sliding face (12.3) of the piston (12) and the valve housing (11).

16. Shut-off valve (1) according to at least one of the preceding claims, **characterized in that** at least one first seal element (15) is arranged between a first sliding face (12.1) of the piston (12) and the first end piece (13).

17. Shut-off valve (1) according to at least one of the preceding claims, **characterized in that** at least one second seal element (16) is arranged between the second end piece (14) and the valve housing (11).

18. Shut-off valve (1) according to at least one of the preceding claims, **characterized in that** the centre axis of the outlet opening (13.1) of the first end piece (13) is coaxial with the centre axis of the axially continuous bore (12.2) of the piston (12).

19. Shut-off valve (1) according to at least one of the preceding claims, **characterized in that** the first end piece (13) and/or the second end piece (14) is/are connected by way of screwing on the valve housing (11).

20. Shut-off valve (1) according to at least one of the preceding claims, **characterized in that** the axially continuous bore (12.2) of the piston (12) has a smaller diameter than the outlet opening (13.1) of the first end piece (13).

21. Shut-off valve (1) according to Claim 12, **characterized in that** an annular face (13.3), formed on the first end side (12.5) of the piston (12) by way of the diameter of the axially continuous bore (12.2) of the piston (12) and the diameter of the outlet opening (13.1) of the first end piece (13), is designed depending on the spring force of the elastic element (18) in such a way that, when a pressure of from 90 to 95% of the shut-off pressure of the tank is reached at the outlet opening (13.1) of the first end piece (13), the piston (12) lifts off from the first end side (13.4) of the first end piece (13) and is displaced axially in the direction of the first end side (14.7) of the second end piece (14).

22. Shut-off valve (1) according to at least one of the preceding claims, **characterized in that** the first end side (12.5) of the piston (12) forms a sealing edge.

## Revendications

1. Vanne d'arrêt (1) pour le remplissage d'un réservoir comprenant un milieu gazeux, comprenant un boîtier de vanne (11), un piston (12) étant disposé de manière déplaçable dans la direction axiale dans le boîtier de vanne (11), le piston (12) présentant un alésage traversant axialement (12.2), un premier embout (13) du boîtier de vanne (11), le premier embout (13) présentant une ouverture de sortie (13.1) en liaison fluidique avec l'alésage traversant axialement (12.2) du piston (12), un deuxième embout (14) du boîtier de vanne (11), le deuxième embout (14) présentant une ouverture d'entrée (14.3) en liaison fluidique avec l'alésage traversant axialement (12.2) du piston (12), un premier côté frontal (12.5) du piston (12) et un premier côté frontal (14.7) du deuxième embout (14) du boîtier de vanne (11), lorsqu'ils sont en contact, formant un siège d'étanchéité,
**caractérisée en ce que** qu'un dispositif de guidage de l'écoulement (S) est réalisé en aval de l'ouverture d'entrée (14.3) du deuxième embout (14), le dispositif de guidage de l'écoulement (S) présentant au moins un alésage conduisant radialement vers l'extérieur (14.4) du deuxième embout (14) et en liaison fluidique avec l'ouverture d'entrée (14.3) du deuxième embout (14) et une chambre (K), la chambre (K) étant réalisée entre le piston (12) et le deuxième embout (14) de telle sorte que le milieu gazeux puisse s'écouler depuis l'ouverture d'entrée (14.3) par le biais de l'au moins un alésage disposé radialement à l'extérieur (14.4) du deuxième embout (14) et que le milieu gazeux dans la chambre (K) soit dévié de l'extérieur vers l'intérieur dans la direction du premier côté frontal (14.7) du deuxième embout (14) et qu'une déviation du milieu gazeux dans la direction de l'alésage traversant axialement du piston (12) soit réalisée.

2. Vanne d'arrêt (1) selon la revendication 1,
**caractérisée en ce que** qu'un renflement (14.5) est réalisé au niveau du premier côté frontal (14.7) du deuxième embout (14).

3. Vanne d'arrêt (1) selon la revendication 1 ou 2,
**caractérisée en ce que** le premier embout (13) et/ou le deuxième embout (14) sont des composants séparés, le premier embout (13) et/ou le deuxième embout (14) étant fixés sur le boîtier de vanne (11).

4. Vanne d'arrêt (1) selon au moins l'une quelconque des revendications précédentes, **caractérisée en ce que** le premier embout (13) est disposé à l'opposé du deuxième embout (14).

5. Vanne d'arrêt (1) selon au moins l'une quelconque des revendications précédentes,
**caractérisée en ce que** le renflement (14.5) est réalisé essentiellement coaxialement avec l'axe médian de l'alésage traversant axialement (12.2) du piston (12).

6. Vanne d'arrêt (1) selon au moins l'une quelconque des revendications précédentes,
**caractérisée en ce que** le renflement (14.5) du deuxième embout (14) constitue une pointe, la pointe présentant un plus petit diamètre que l'alésage traversant axialement (12.2) du piston (12).

7. Vanne d'arrêt (1) selon au moins l'une quelconque des revendications précédentes, **caractérisée en ce que** le premier côté frontal (14.7) du deuxième embout (14) présente une réalisation concave radialement périphérique (14.6).

8. Vanne d'arrêt (1) selon la revendication 7,
**caractérisée en ce que** la réalisation concave radialement périphérique (14.6) constitue une transition progressive avec la pointe.

9. Vanne d'arrêt (1) selon au moins l'une quelconque des revendications précédentes, **caractérisée en ce que** les alésages conduisant radialement vers l'extérieur (14.4) du deuxième embout (14) présentent ensemble une section transversale qui correspond au moins à celle de l'ouverture d'entrée (14.3) du deuxième embout (14).

10. Vanne d'arrêt (1) selon au moins l'une quelconque des revendications précédentes,
**caractérisée en ce que** le boîtier de vanne (11) présente un premier côté frontal (11.4) qui présente une réalisation concave radialement périphérique (11.1) de telle sorte que le milieu gazeux soit dévié de l'extérieur vers l'intérieur dans la direction du renflement (14.5) du deuxième embout (14).

11. Vanne d'arrêt (1) selon au moins l'une quelconque des revendications précédentes,
**caractérisée en ce que** l'au moins un alésage conduisant radialement vers l'extérieur (14.4) du deuxième embout (14) est disposé de manière décalée tangentiellement par rapport à l'axe médian de l'ouverture d'entrée (14.3) du deuxième embout (14) de telle sorte que l'au moins un alésage conduisant radialement vers l'extérieur (14.4) lors d'un remplissage, provoque un tourbillonnement du milieu gazeux.

12. Vanne d'arrêt (1) selon au moins l'une quelconque des revendications précédentes,
**caractérisée en ce qu'**entre un deuxième côté frontal (12.6) du piston (12) et un deuxième côté frontal (11.5) de la vanne de boîtier (11) est disposé un élément élastique (18).

13. Vanne d'arrêt (1) selon la revendication 12,
**caractérisée en ce que** l'élément élastique (18) est au moins un ressort Belleville.

14. Vanne d'arrêt selon la revendication 12 et 13,
**caractérisée en ce que** l'élément élastique (18) précontraint le piston (12) axialement contre le premier embout (13).

15. Vanne d'arrêt (1) selon au moins l'une quelconque des revendications précédentes,
**caractérisée en ce qu'**au moins un troisième élément d'étanchéité (17) est disposé entre une deuxième surface de glissement (12.3) du piston (12) et le boîtier (11).

16. Vanne d'arrêt (1) selon au moins l'une quelconque des revendications précédentes, **caractérisée en ce qu'**au moins un premier élément d'étanchéité (15) est disposé entre une première surface de glissement (12.1) du piston (12) et le premier embout (13).

17. Vanne d'arrêt (1) selon au moins l'une quelconque des revendications précédentes, **caractérisée en ce qu'**au moins un deuxième élément d'étanchéité (16) est disposé entre le deuxième embout (14) et le boîtier de soupape (11).

18. Vanne d'arrêt (1) selon au moins l'une quelconque des revendications précédentes,
**caractérisée en ce que** l'axe médian de l'ouverture de sortie (13.1) du premier embout (13) est coaxial avec l'axe médian de l'alésage traversant axialement (12.2) du piston (12).

19. Vanne d'arrêt (1) selon au moins l'une quelconque des revendications précédentes,
**caractérisée en ce que** le premier embout (13) et/ou le deuxième embout (14) sont connectés par vissage au boîtier de vanne (11).

20. Vanne d'arrêt (1) selon au moins l'une quelconque des revendications précédentes,
**caractérisée en ce que** l'alésage traversant axialement (12.2) du piston (12) présente un plus petit diamètre que l'ouverture de sortie (13.1) du premier embout (13).

21. Vanne d'arrêt (1) selon la revendication 12,
**caractérisée en ce qu'**une surface annulaire (13.3) formée au niveau du premier côté frontal (12.5) du piston (12) par le diamètre de l'alésage traversant axialement (12.2) du piston (12) et le diamètre de l'ouverture de sortie (13.1) du premier embout (13), est configurée en fonction de la force de ressort de l'élément élastique (18) de telle sorte qu'à l'obtention d'une pression au niveau de l'ouverture de sortie (13.1) du premier embout (13) de 90 à 95 % de la pression d'arrêt du réservoir, le piston (12) se soulève du premier côté frontal (13.4) du premier embout (13) et se déplace axialement dans la direction du premier côté frontal (14.7) du deuxième embout (14).

22. Vanne d'arrêt (1) selon au moins l'une quelconque des revendications précédentes,
**caractérisée en ce que** le premier côté frontal (12.5) du piston (12) constitue une arête d'étanchéité.
